# EUROPEAN PATENT APPLICATION

(11) **EP 4 379 452 A1**
(43) Date of publication of application: **05.06.2024**
(21) Application number: 23210130.3
(22) Date of filing: 15.11.2023
(51) Int. Cl.: G02B 27/01, G06T 19/00

(54) **SYSTEMS AND METHODS FOR MAPPING AND LOCALISATION**

(30) Priority: 01.12.2022 GB 202218061
(71) Applicant: Sony Interactive Entertainment Inc., Tokyo 108-0075 (JP)
(72) Inventor: RAGHOEBARDAJAL, Sharwin, London W1F 7LP (GB); RUBIO, Jose, London W1F 7LP (GB)
(74) Representative: D Young & Co LLP

(57) **Abstract**

There is provided a mapping and localisation apparatus. The apparatus comprises: a communication processor configured to: receive data relating to one or more first images of an environment captured by one or more first cameras of a first mobile electronic device; and receive data relating to one or more second images of the environment captured by one or more second cameras of one or more second mobile electronic devices; a mapping processor configured to process the data relating to the one or more first images to generate a three dimensional map of the environment; and a position processor configured to determine a position of the or each second mobile electronic device at least in part based on the generated map and the received data relating to the one or more second images.

## Description

### BACKGROUND OF THE INVENTION

### Field of the invention

The present invention relates to a mapping and localisation apparatus, system, and method, and a corresponding mobile electronic device.

### Description of the Prior Art

In some computer vision applications, there is a requirement to be able to process the 3D position of image features captured by a 2D camera. One example situation is found in robotics, in that a robot using computer vision may need to be able to map its environment and also know its own location with respect to that environment. Another example situation occurs in videogames, in that, for example, a hand-held or head-mounted gaming device having a camera built into the device can be used to capture images of the real surroundings, onto which so-called augmented reality (AR) image features can be rendered for display to a user, and/or to enable import of at least part of the real surroundings into a virtual environment. For example, a gaming device may capture an image of a real building, but this is displayed to the user with an animal, superhero or other image rendered so as to appear to be climbing up the side of the building.

In order to integrate real-world features with a virtual environment, augment an image of real world features with virtual elements, and/or use real world features to at least partially configure a virtual environment, the gaming device needs to be able to derive the orientation of the feature (e.g. the side of the building) and an indication of its scale which may be derived as an indication of its relative distance from the camera compared to other captured image features. In order to integrate, augment or use these features while continuously tracking a moving camera, the camera orientation and position for a captured image frame, and typically a constant plane equation for feature surfaces (e.g. an estimate of the surface position), are required.

Whist it is possible to use AR markers to indicate scale and orientation directly (by virtue of a known size and pattern asymmetry), typically it is not practical to add such markers to the real world environment, or to expect a user to know where best to place them.

Consequently techniques have been proposed, generically called "simultaneous localisation and mapping" (SLAM) in which the problems of building a map of a camera's environment and determining the position in space of the camera itself are bound together in a single iterative process. Accordingly, SLAM attempts to build a map or model of an unknown scene and estimate a camera position within that map.

In augmented, or virtual, reality systems it is often desirable to track the position of hand-held controllers used by the user in real-time so that this position can be used as an input for controlling the environment. Existing systems typically track the controllers using a SLAM process running on the head-mounted gaming device. However, this may result in inaccurate tracking of the controllers. In particular, it may be difficult to track the controllers when they are not visible to the cameras of the head-mounted gaming device - which may, for example, occur when a user sweeps their arm above their head or beyond their body.

It is an aim of the present application to provide improved mapping and localisation arrangements.

### SUMMARY OF THE INVENTION

Various aspects and features of the present invention are defined in the appended claims and within the text of the accompanying description and include at least:
- In a first aspect, a mapping and localisation apparatus is provided in accordance with claim 1.
- In a second aspect, a mapping and localisation system is provided in accordance with claim 11.
- In a third aspect, a mobile electronic device is provided in accordance with claim 12.
- In a fourth aspect, a mapping and localisation method is provided in accordance with claim 14.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 schematically illustrates a user wearing a head-mountable display apparatus (HMD) and holding controllers connected to a games console;
- Figure 2 schematically illustrates a HMD worn by a user;
- Figure 3a schematically illustrates an example of a set of detected feature points for an environment;
- Figures 3b and 3c schematically illustrate images captured from the two viewpoints of Figure 3a;
- Figure 4 is a schematic flowchart giving an overview of a tracking and mapping process;
- Figure 5 is a schematic flowchart of a camera pose calculation process;
- Figure 6 is a schematic flowchart of an initialisation technique;
- Figure 7 schematically illustrates a mapping and localisation apparatus;
- Figure 8 schematically illustrates a mobile electronic device;
- Figure 9 is a schematic flowchart of an mapping and localisation method;
- Figure 10 is a schematic flowchart of a further mapping and localisation method; and
- Figure 11 is a schematic flowchart of a yet further mapping and localisation method.

### DESCRIPTION OF THE EMBODIMENTS

Mapping and localisation apparatuses, systems and methods, and corresponding mobile electronic devices are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

In an example embodiment of the present invention, a suitable system and/or platform for implementing the methods and techniques herein may be a virtual reality system including an HMD (i.e. a first mobile electronic device), and one or more controllers (i.e. one or more second mobile electronic devices).

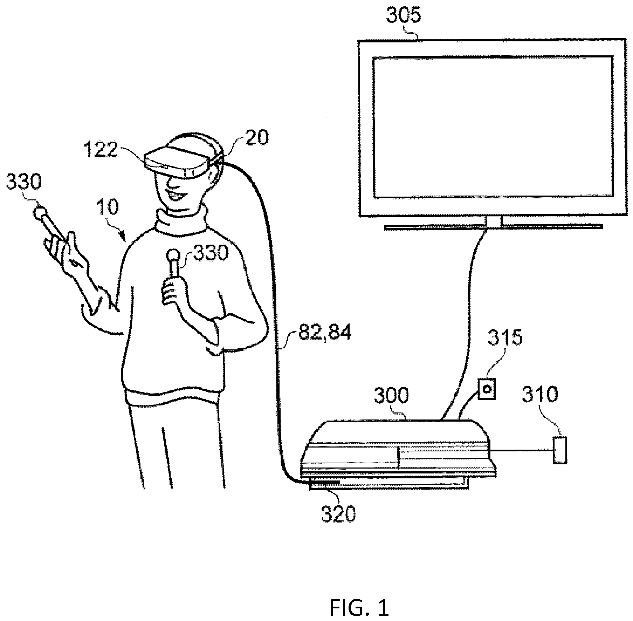

Referring now to the drawings, wherein like reference numerals designate identical or corresponding parts, Figure 1 schematically illustrates an example virtual reality system and in particular shows a user 10 wearing a HMD 20 and holding controllers 330 connected to a games console 300. The games console 300 is connected to a mains power supply 310 and to a display device 305. One or more cables 82, 84 may optionally link the HMD 20 to the games console 300 or the HMD 20 may communicate with the games console via a wireless communication.

The video displays in the HMD 20 are arranged to display images generated by the games console 300, and the earpieces 60 in the HMD 20 are arranged to reproduce audio signals generated by the games console 300. Note that if a USB type cable is used, these signals will be in digital form when they reach the HMD 20, such that the HMD 20 comprises a digital to analogue converter (DAC) to convert at least the audio signals back into an analogue form for reproduction.

The HMD 20 comprises one or more cameras (i.e. image sensors) 122 for capturing images of the environment around the user 10 (e.g. a room in which the user is using the HMD 20). Images captured by cameras 122 are used to generate a map of the environment as described in further detail below. The images may also be used to determine a position of the HMD 20 in the environment, e.g. via a SLAM process.

Images from the camera 122 can optionally be passed back to the games console 300 via one or more of the cables 82, 84. Similarly, if motion or other sensors are provided at the HMD 20, signals from those sensors may be at least partially processed at the HMD 20 and/or may be at least partially processed at the games console 300.

The USB connection from the games console 300 may also provide power to the HMD 20, according to the USB standard.

Figure 1 also shows the separate display device 305 such as a television or other openly viewable display (by which it is meant that viewers other than the HMD wearer may see images displayed by the display 305) and an image sensor 315, which may be (for example) directed towards the user (such as the HMD wearer) during operation of the apparatus. An example of a suitable image sensor is the PlayStation^{®} Eye camera, although more generally a generic "webcam", connected to the console 300 by a wired (such as a USB) or wireless (such as Wi-Fi^{®} or Bluetooth^{®}) connection.

The display 305 may be arranged (under the control of the games console) to provide the function of a so-called "social screen". It is noted that playing a computer game using an HMD can be very engaging for the wearer of the HMD but less so for other people in the vicinity (particularly if they are not themselves also wearing HMDs). To provide an improved experience for a group of users, where the number of HMDs in operation is fewer than the number of users, images can be displayed on a social screen. The images displayed on the social screen may be substantially similar to those displayed to the user wearing the HMD, so that viewers of the social screen see a virtual environment (or a subset, version or representation of it) as seen by the HMD wearer. In other examples, the social screen could display other material such as information relating to the HMD wearer's current progress through an ongoing computer game. For example, the HMD wearer could see a virtual environment from a first person viewpoint whereas the social screen could provide a third person view of activities and movement of the HMD wearer's avatar, or an overview of a larger portion of the virtual environment. In these examples, an image generator (for example, a part of the functionality of the games console) is configured to generate some of the virtual environment images for display by a display separate to the head mountable display.

In Figure 1 the user is also shown holding a pair of hand-held controllers 330 which may be, for example, Sony^{®} Move^{®} controllers which communicate wirelessly with the HMD 20 to transmit and receive data as described in further detail below. Alternatively, the controllers 330 may communicate with the HMD via a wired connection.

The controllers 330 also communicate wirelessly with the games console 300, for example to control (or to contribute to the control of) game operations relating to a currently executed game program.

The controllers 330 each comprise one or more cameras (not shown) for capturing images of the environment around the user 10. Images from these cameras are used to determine the position of the controllers 330 in the environment as described in further detail below.

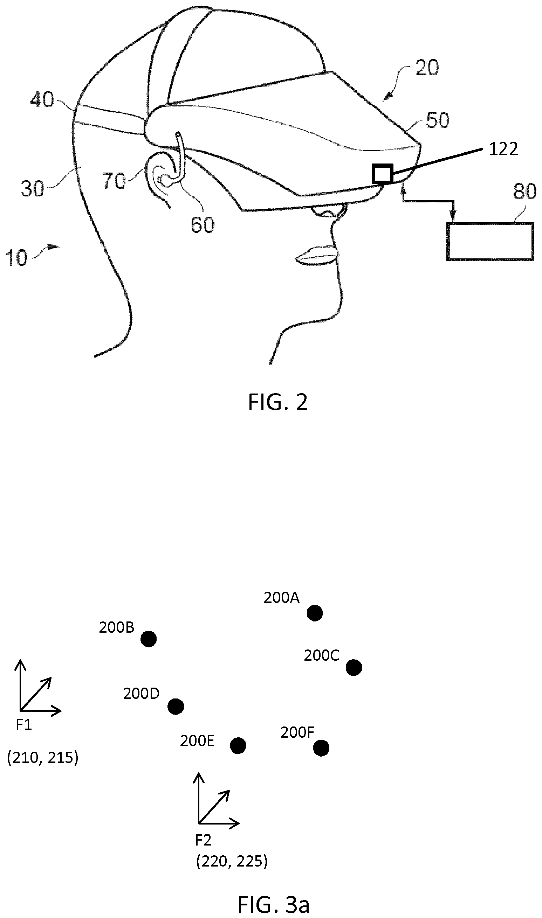

Referring now to Figure 2, a user 10 is shown wearing an HMD 20 (as an example of a generic head-mountable apparatus - other examples including audio headphones or a head-mountable light source) on the user's head 30. The HMD comprises a frame 40, in this example formed of a rear strap and a top strap, a camera 122, and a display portion 50. As noted above, many gaze tracking arrangements may be considered particularly suitable for use in HMD systems; however, it will be appreciated that use of such a gaze tracking arrangement is not considered essential.

Note that the HMD 20 and controllers 330 may comprise further features, to be described below in connection with other drawings, but which are not shown in Figures 1 and 2 for clarity of this initial explanation.

The HMD of Figure 2 completely (or at least substantially completely) obscures the user's view of the surrounding environment. All that the user can see is the pair of images displayed within the HMD, as supplied by an external processing device such as a games console in many embodiments. Of course, in some embodiments images may instead (or additionally) be generated by a processor or obtained from memory located at the HMD itself.

The HMD has associated headphone audio transducers or earpieces 60 which fit into the user's left and right ears 70. The earpieces 60 replay an audio signal provided from an external source, which may be the same as the video signal source which provides the video signal for display to the user's eyes.

The combination of the fact that the user can see only what is displayed by the HMD and, subject to the limitations of the noise blocking or active cancellation properties of the earpieces and associated electronics, can hear only what is provided via the earpieces, mean that this HMD may be considered as a so-called "full immersion" HMD. Note however that in some embodiments the HMD is not a full immersion HMD, and may provide at least some facility for the user to see and/or hear the user's surroundings. This could be by providing some degree of transparency or partial transparency in the display arrangements, and/or by projecting a view of the outside (captured using a camera, for example a camera mounted on the HMD) via the HMD's displays, and/or by allowing the transmission of ambient sound past the earpieces and/or by providing a microphone to generate an input sound signal (for transmission to the earpieces) dependent upon the ambient sound.

One or more cameras (i.e. image sensors) can be provided as part of the HMD (e.g. camera 122, and further cameras not shown in Figure 2). For example, the HMD 20 may be provided with one or more front-facing cameras arranged to capture one or more images to the front of the HMD. The one or more cameras may comprise one or more of an RGB image sensor and an infrared (IR) image sensor. Such images may be used for head tracking purposes, and, in some embodiments may also be suitable for capturing images for an augmented reality (AR) style experience.

A Bluetooth^{®} antenna (not shown) may provide communication facilities or may simply be arranged as a directional antenna to allow a detection of the direction of a nearby Bluetooth^{®} transmitter.

In operation, a video signal is provided for display by the HMD 20. This could be provided by an external video signal source 80 such as the games console 300, in which case the signals may be transmitted to the HMD by a wired or a wireless connection. Examples of suitable wireless connections include Bluetooth^{®} connections and an example of suitable wired connections include High Definition Multimedia Interface (HDMI^{®}) and DisplayPort^{®}. Audio signals for the earpieces 60 can be carried by the same connection. Similarly, any control signals passed between the HMD to the video (audio) signal source may be carried by the same connection. Furthermore, a power supply (including one or more batteries and/or being connectable to a mains power outlet) may be linked by a wired connection to the HMD. Note that the power supply and the video signal source 80 may be separate units or may be embodied as the same physical unit. There may be separate cables for power and video (and indeed for audio) signal supply, or these may be combined for carriage on a single cable (for example, using separate conductors, as in a USB cable, or in a similar way to a "power over Ethernet" arrangement in which data is carried as a balanced signal and power as direct current, over the same collection of physical wires). The video and/or audio signal may in some examples be carried by an optical fibre cable. In other embodiments, at least part of the functionality associated with generating image and/or audio signals for presentation to the user may be carried out by circuitry and/or processing forming part of the HMD itself. In some cases, a power supply may be provided as part of the HMD itself.

Some embodiments of the invention are applicable to an HMD having at least one cable linking the HMD to another device, such as a power supply and/or a video (and/or audio) signal source. So, embodiments of the invention can include, for example:
(a) an HMD having its own power supply (as part of the HMD arrangement) but a wired connection (also referred to as a cabled connection) to a video and/or audio signal source;
(b) an HMD having a wired connection to a power supply and to a video and/or audio signal source, embodied as a single physical cable or more than one physical cable;
(c) an HMD having its own video and/or audio signal source (as part of the HMD arrangement) and a wired connection to a power supply; or
(d) an HMD having a wireless connection to a video and/or audio signal source and a wired connection to a power supply.

If one or more cables are used, the physical position at which the cable enters or joins the HMD is not particularly important from a technical point of view. Aesthetically, and to avoid the cable(s) brushing the user's face in operation, it would normally be the case that the cable(s) would enter or join the HMD at the side or back of the HMD (relative to the orientation of the user's head when worn in normal operation). Accordingly, the position of the cables relative to the HMD in Figure 2 should be treated merely as a schematic representation. Accordingly, the arrangement of Figure 2 provides an example of a head-mountable display comprising a frame to be mounted onto an observer's head, the frame defining one or two eye display positions which, in use, are positioned in front of a respective eye of the observer and a display element mounted with respect to each of the eye display positions, the display element providing a virtual image of a video display of a video signal from a video signal source to that eye of the observer.

Figure 2 shows just one example of an HMD. Other formats are possible: for example an HMD could use a frame more similar to that associated with conventional eyeglasses, namely a substantially horizontal leg extending back from the display portion to the top rear of the user's ear, possibly curling down behind the ear. In other (not full immersion) examples, the user's view of the external environment may not in fact be entirely obscured; the displayed images could be arranged so as to be superposed (from the user's point of view) over the external environment.

The HMD 20 as shown in Figure 2 thus provides an example of a first mobile electronic device comprising one or more ('first') cameras for capturing one or more ('first') images of a surrounding environment. When the HMD 20 is worn by a user, the cameras can thus capture a plurality of images of the surrounding environment from respective different viewpoints and the plurality of images can be used for simultaneous localisation and mapping for the surrounding environment.

In turn, each controller 330 as shown in Figure 1 provides an example of a second mobile electronic device comprising one or more ('second') cameras for capturing one or more ('second') images of the surrounding environment. When the controller 330 is held by the user, the cameras can thus capture a plurality of images of the surrounding environment from respective different viewpoints and the plurality of images can be used (in conjunction with the map of the environment generated by the HMD 20) to determine the position of the controller 330.

Whilst examples of the present disclosure will be described with reference to an HMD and a controller, which represent examples of mobile electronic devices, the embodiments of the present disclosure are not limited to an HMD and/or a controller and can be performed for any two mobile electronic devices being used in the same environment and each comprising one or more cameras, of which examples include: handheld devices (e.g. a smartphone), robotic devices and autonomous cars. For example, two robotic devices each provided with cameras may be used in the same environment (e.g. a warehouse), and a first robotic device can be used for simultaneous localisation and mapping of the environment, and a position of a second robotic device can be determined based on the map of the environment generated by the first robotic device and images captured by cameras of the second robotic device.

Before discussing the techniques of the present disclosure, some terminology will be introduced by discussing a conventional tracking and mapping process using images of an environment.

In a tracking and mapping process, images of a scene in three-dimensional space are captured from different viewpoints (different camera poses) using one or more image sensors. Feature points can be detected in the captured images of the scene using known image recognition techniques. For example, for an image comprising an object having several corner points, a corner detection algorithm such as FAST (Features from Accelerated Segment Test) can be used to extract feature points corresponding to the corners of one or more elements in the image, such as a corner of a chair or a corner of a wall. The feature points are thus identified in the plurality of captured images and are associated with one another in the sense that the image position of a particular three-dimensional point as captured in one image is associated with the image position of that three-dimensional point as captured in another image. The basis of a typical tracking and mapping system involves deriving, from this information on associated points in one image with points in another image, an internally consistent set of data defining the respective camera viewpoints and the three-dimensional positions of the points. In order for that set of data to be internally consistent, it should lead to a consistent set of three-dimensional positions, and in respect of a particular image, it should lead to a consistent relationship between the camera pose for that image and the expected (and actual) image positions of points as captured by that image.

To illustrate some of these concepts further, Figure 3a schematically illustrates an example of a set of detected feature points (labelled as numerals 200A ... 200F) obtained from two respective images captured with two different viewpoints F1, F2 for a scene. Each viewpoint comprises a camera position 210, 220 and a camera orientation 215, 225 relative to a local coordinate frame (illustrated schematically as three orthogonal axes in each case). Although, for practical reasons, Figure 3a is drawn in two dimensions, the detected feature points each represent a three-dimensional point.

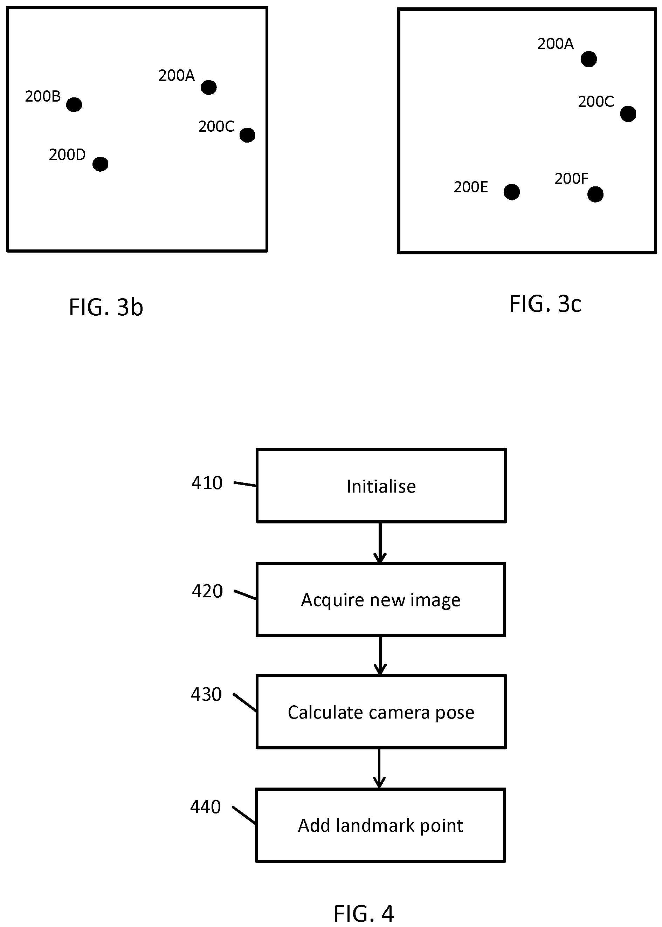

Figures 3b and 3c are schematic representations of images captured by the cameras at positions F1 and F2. In each case, some of the points 200A ... 200F can be seen in the captured images. If the set of data discussed above is internally consistent, the actual image positions of these points will correspond to the image positions predicted from the camera pose and the three-dimensional positions derived for those points.

Figure 4 is a schematic flowchart giving an overview of a tracking and mapping process that can be performed on the basis of a set of detected feature points as shown in Figure 3a. The example process starts from no advanced (*a priori*) knowledge of either the camera viewpoints or the spatial position of feature points to be captured by the camera images. Accordingly, a first stage is to initialise the system at a step 410. Initialisation will be discussed in more detail below, but typically involves detecting feature points captured for different viewpoints so that a same feature point is detected for two or more different viewpoints, in which each detected feature point corresponds to a landmark point for use in mapping the scene, and deriving a set of map data for the scene using each of the landmark points.

A loop operation then follows, comprising the steps of acquiring a new image (for example, at an image capture rate such as 15 images per second, 30 images per second, 60 images per second or the like) at a step 420, calculating a position and orientation of the viewpoint for the new image from the set of map data and the newly acquired image at a step 430 and, potentially, adding detected feature points from the newly acquired image as further landmark points for updating the map at a step 440. Note that although the step 440 is shown in this example as forming part of the basic loop of operation, the decision as to whether to add further landmark points is optional and could be separate from this basic loop.

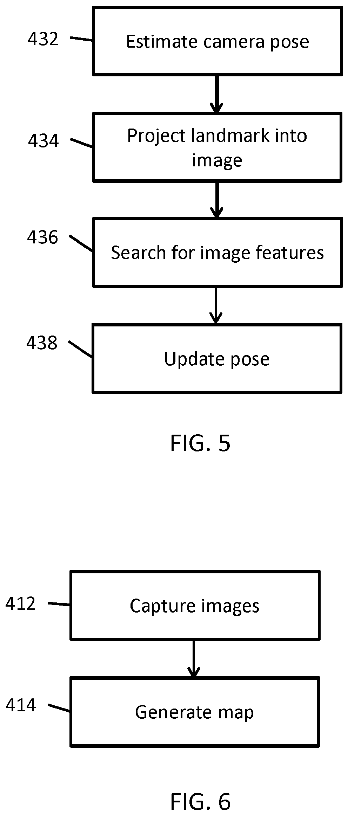

Figure 5 is a schematic flowchart of operations carried out as part of the step 430 of Figure 4. These operations are performed to derive a viewpoint position and orientation (also referred to as a camera pose) from a newly acquired image and the set of map data.

At a step 432, the system first estimates a prediction of a camera pose in respect of the newly acquired image. This initial estimation may be performed using a model. The model could be embodied as a position tracking filter such as a Kalman filter, so that a new camera pose is extrapolated from the recent history of changes in the camera pose. In another example, the model could make use of sensor data such as gyroscopic or accelerometer data indicating changes to the physical position and orientation in space of the device on which the camera is mounted (e.g. an HMD comprising one or more inertial sensors). However, at a very basic level, the new camera pose could be estimated simply to be the same as the camera pose derived in respect of a preceding captured image.

At a step 434, the landmark points of the map data are projected into corresponding positions in the newly acquired image based on the initial estimate of the camera pose. This gives an image position for a landmark point of the map in the newly captured image (or a subset of the landmark points under consideration), where the image position for the landmark point corresponds to where the landmark point is expected to be seen in the newly captured image. At a step 436, the system searches the newly captured image for image features corresponding to the landmark points. To do this, a search can be carried out for image features which relate to or correlate with the landmark point. The search can be carried out at the exact predicted position, but also at a range of positions near to the predicted position. Finally, at a step 438 the estimated camera pose for that image is updated according to the actual detected positions of the landmarks in the captured image.

Figure 6 is a schematic flowchart of a basic initialisation technique (corresponding to the step 410 discussed above), comprising, at a step 412, capturing a plurality of images of a scene from different viewpoints and, at a step 414, generating a map using each of the feature points detected from the captured images as a respective landmark point. The camera may be configured to capture images at a predetermined frame rate, or in some cases image capture may be instructed by a user providing a user input at a respective time to capture an image. As such, feature points for a plurality of different viewpoints can be detected and a map can be generated comprising a plurality of landmark points, in which each landmark point included in the generated map corresponds to a respective detected feature point, and in which each landmark point included in the map is associated with three-dimensional position information and image information for the detected feature point. Known Structure from Motion (SfM) techniques may be used for creating such a map data set. Optionally, the image capturing device may comprise one or more inertial sensors such as a gyroscope, magnetometer and/or accelerometer for tracking changes in positon and/or orientation and information from one or more such sensors can also be used for creating the map data set. The above description provides an overview of a typical technique for generating a map for an environment using detected feature points.

Embodiments of the present invention relate to determining positions of one or more second mobile electronic devices (such as the controllers 330) by a mapping and localisation apparatus (e.g. a first mobile electronic device such as the HMD 20, and/or a further device such as the games console 300) based on images of an environment captured by the second mobile electronic device and a map of the environment generated based on images captured by the first mobile electronic device. This allows accurately positioning the second mobile electronic device while reducing the amount of processing required at the second mobile electronic device. The present invention is particularly applicable to a virtual reality system because it allows leveraging a SLAM process running on the HMD and/or games console (to map an environment and track the HMD within it) to further accurately track the controllers in the same environment (even if the controllers are not visible to cameras of the HMD) while reducing the computational requirements on the controllers.

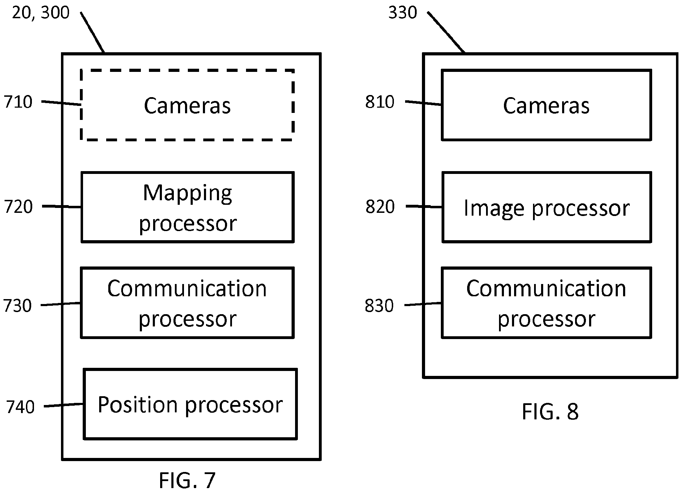

Figure 7 schematically illustrates a mapping and localisation apparatus in accordance with embodiments of the disclosure. The mapping and localisation apparatus comprises: a communication processor 730 configured to receive data relating to one or more first images of an environment captured by one or more first cameras (such as camera 122) of the HMD 20 (e.g. when worn by the user 10), and to receive data relating to one or more second images of the environment captured by one or more second cameras of one or more controllers 330 (e.g. when held by the user 10); a mapping processor 720 configured to process (e.g. using the techniques as described above with reference to Figures 3a to 6) the data relating to the one or more first images to generate a three dimensional map of the environment; and a position processor 740 configured to determine a position of the or each controller 330 at least in part based on the generated map and the received data relating to the one or more second images.

The mapping and localisation apparatus is one of the HMD 20 and the games console 300.

In some embodiments, the mapping and localisation apparatus is the HMD 20, and further comprises one or more first cameras 710 from which the communication processor 730 receives the data relating to the one or more first images. The below description primarily refers to embodiments of the mapping and localisation apparatus comprising the HMD 20 and cameras 710. However, it will be appreciated that the cameras 710 are an optional feature of the mapping and localisation apparatus (as indicated using the dotted line in Figure 7) - for example, in other embodiments, the mapping and localisation apparatus may be the games console 300, and the HMD 20 may capture the first images and transmit data relating to the first images to the games console 300 which then generates the environment map and determines the position of the one or more controller 330.

For simplicity, the below description also mainly refers to embodiments comprising only one controller 330 (i.e. only one second mobile electronic device). It will be appreciated that the techniques described herein can be applied to determining the position of multiple controllers 330.

Figure 8 schematically illustrates a second mobile electronic device comprising a controller 330 in accordance with an embodiment of the disclosure. The controller 330 comprises: one or more second cameras 810 for capturing one or more second images of the surrounding environment (e.g. when the controller 330 is held by the user 10); an image processor 820 configured to process the one or more second images to detect a plurality of features in the second images (e.g. using the techniques as described above with reference to Figures 3a to 6); and a communication processor 830 configured to transmit data relating to the detected features to the mapping and localisation apparatus (e.g. the HMD 20) for determining the position of the controller 330 at least in part based on: a map of the environment generated by the mapping and localisation apparatus (e.g. the HMD 20) using one or more first images of the environment captured by one or more first cameras of a first mobile electronic device (e.g. cameras 710 of the HMD 20), and the data relating to the detected features transmitted by the controller 330.

It will be appreciated that the various processors of the mapping and localisation apparatus 20, 330 and controller 330 - e.g. the mapping processor 720, communication processor 730 and position processor 740- may be implemented as a single physical processor - e.g. a CPU of the HMD 20 and/or the games console 300. Alternatively, these processors may be implemented as two or more separate physical processors.

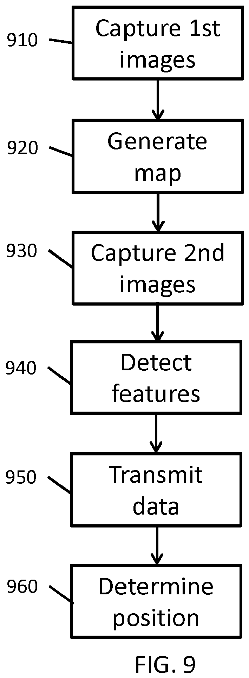

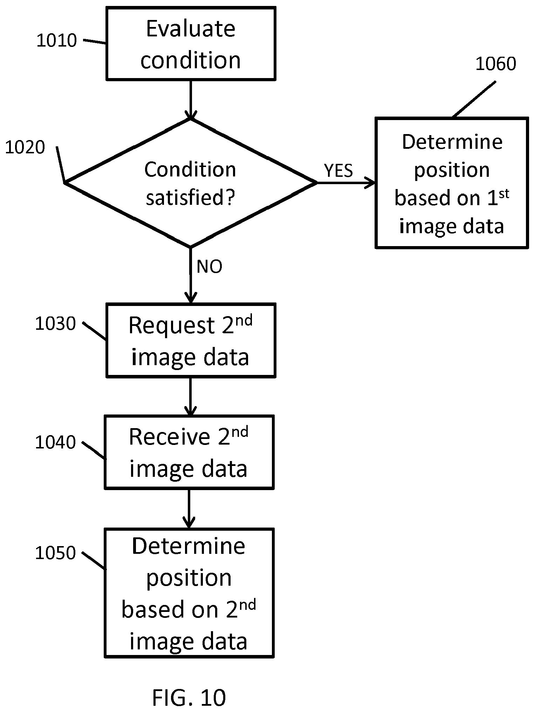

Figures 9 and 10 show schematic flowcharts of mapping and localisation methods in accordance with embodiments of the disclosure in which the mapping and localisation apparatus comprises the HMD 20 (i.e. the first mobile electronic device) and thus comprises the cameras 710.

Figure 9 is a schematic flowchart of a mapping and localisation method in accordance with an embodiment of the disclosure.

A step 910 comprises capturing one or more first images of the environment around the user using the cameras 710 of the HMD 20 while it is worn by the user. The first images may, for example, be RGB and/or infrared images of the environment. It will be appreciated that in alternative embodiments in which the mapping and localisation apparatus does not comprise the HMD 20 (and e.g. instead comprises the games console 300), step 910 may instead comprise receiving data relating to the one or more first images form the HMD 20.

A step 920 comprises processing, by the mapping processor 720 of the HMD 20, the first images to generate a three dimensional map of the environment from the first images. The mapping processor 720 may generate the map of the environment based on detected feature points in the first images, using the techniques described with reference to Figures 3a to 6.

In some embodiments, in addition to generating the environment map, the mapping processor 720 may be configured to determine a position of the HMD 20 in the environment by executing a simultaneous location and mapping process with respect to the first images. In other embodiments, the mapping processor 720 may only generate the environment map.

A step 930 comprises capturing one or more second images of the environment around the user using the cameras 810 of the controller 330 while it is held by the user. As for the first images, the second images may, for example, be RGB and/or infrared images of the environment. The second images may be of the same or different format to the first images - e.g. the first and second images may both be RGB images, or the first images may be RGB images and the second images may be infrared images.

Capturing the second images using cameras 810 of the controller 330 allows locating the controller 330 even when it is not visible to the cameras 710 of the HMD 20. Thus, the position of the controller 330 can be determined more accurately which allows improved tracking of the user's inputs to the virtual reality system.

A step 940 comprises processing, by the image processor 820 of the controller 330, the second images to detect a plurality of features in the second images. The image processor 820 preferably detects features in the second images captured by each of the cameras 810 at the camera frame rate to allow more accurately tracking the position of the controller 330. Alternatively, the image processor 820 may detect features only for some frames (e.g. every other frame) and/or only a subset of the second images to reduce the amount of computation that is required.

The image processor 820 performs one or more image processing operations for at least a portion of the second images (and/or portions of each of the second images) to extract one or more feature points in the second images. Salient features within the second images including structures such as points, edges and corners can be detected and one or more feature points can thus be extracted for one or more image features in the second images. For example, an edge of a wall can be detected in one of the second images and one or more feature points can be associated with the edge. The image processor 820 may use any suitable feature detection algorithm for detecting features in each captured image.

In some embodiments, the image processor 820 may detect corner features in the second images. Detecting corner features allows reducing the computational requirements on the controller 330 because detecting corner features is relatively computationally cheap (as compared to detecting other types of features). Examples of suitable corner detection algorithms include FAST (Features from Accelerated Segment Test) and the Harris corner detection algorithm.

Alternatively, or in addition, one or more predetermined markers (e.g. AR markers, QR codes, and/or LEDs) may have been placed within the environment which can similarly be detected in the second images by the image processor 820. The image processor 820 may thus be configured to detect a feature (e.g. a feature point) corresponding to a predetermined marker in a given captured second image.

Hence, for each second image captured by the cameras 810, the image processor 820 analyses at least some of the given image using one or more feature detection algorithms to detect one or more features in the image, in which a detected feature corresponds to one or more feature points, e.g., a point for an object in the environment or a point for a predetermined marker in the environment.

In some embodiments, step 940 may further comprise extracting, by the image processor 820, feature descriptors for the detected feature points. Examples of suitable algorithms for extracting feature descriptors include SIFT (Scale-Invariant Feature Transform), KAZE, and SURF (Speeded Up Robust Features).

A step 950 comprises transmitting, by the communication processor 830 of the controller 330, data relating to the second images to the HMD 20.

In some embodiments, the data transmitted by the communication processor 830 comprises data relating to features detected in the second images by the image processor 820. For example, the transmitted data may include second image portions around the detected features (e.g. portions of the second images around detected corner features), or, if the image processor 820 also extracts feature descriptors for the features, data relating to the extracted descriptors.

Alternatively, or in addition, the data transmitted by the communication processor 830 may comprise the second images or portions thereof. Thus, it will be appreciated that step 940 is optional and the communication processor 830 may transmit data relating to the second images without first detecting features (and/or extracting descriptors for the features). Transmitting the second images (or portions thereof) allows further reducing the processing at the controller 330 by moving the image processing of the second images to the HMD 20. However, this may increase the communication bandwidth and so may not be appropriate in every case. In some embodiments, where the second images (or portions thereof) are transmitted to the HMD 20, the HMD 20 may perform further processing on the second images, for example to detect further features (e.g. edge features) in the second images to allow yet more accurately tracking the controller 330. The data transmitted at step 950 may also include data relating to motion of the controller 330 (e.g. captured using one or more inertial sensors on the controller 330).

It will be appreciated that step 950 comprises transmitting pre-processed data for further processing by the HMD 20 to determine the position of the controller 330 (e.g. using a SLAM algorithm running on the HMD 20). The extent of pre-processing done on the controller 330 side varies between embodiments (e.g. the controller 330 may transmit the raw second images or data relating to features detected in the second images), but in all cases a substantial proportion of the processing for positioning the controller 330 is moved from the controller 330 to the HMD 20.lt will also be appreciated that step 950 may alternatively be expressed as receiving, by the communication processor 730 of the HMD 20, the data relating to the second images from the controller 330.

A step 960 comprises determining, by the position processor 740 of the HMD 20, a position of the controller 330 based on the map generated by the HMD 20 at step 920 and the data relating to the second images received from the controller 330 at step 950.

The position processor 740 may generally determine the position of the controller 330 using the techniques described with reference to Figures 3a to 6. It will be appreciated that the specific processing steps for determining the controller 330 position depend on the nature of the second image data transmitted by the controller 330 at step 950. In embodiments where the transmitted data includes detected features with feature descriptors, the position processor 740, less processing may be required at the HMD 20 side to determine the position of the controller 330. In embodiments where the transmitted data does not include detected features and/or feature descriptors and instead includes, e.g., raw second images or portions thereof, more processing may be required at the HMD 20 side and the position processor 740 may first detect features and/or extract feature descriptors for the second images before determining the position of the controller 330 based on the environment map.

The mapping and localisation method of the present invention provides several advantages. By using the second images captured using cameras 810 of the controller 330 to position the controller 330, the controller 330 can be accurately positioned, even if not visible to cameras 710 of the HMD 20. At the same time, by re-using the environment map generated by the HMD 20 to position the controller 330 and more generally moving the majority of processing to the HMD 20, the amount of processing required on the controller 330 is reduced which allows using simpler and cheaper processing hardware for the controller 330 (such as a conventional CPU (Central Processing Unit) or DSP (Digital Signal Processor)) as opposed to requiring dedicated, more expensive, hardware. Further, by using the same environment map (generated by the HMD 20) to position the HMD 20 and the controller 330, the HMD 20 and controller 330 can be positioned in a more consistent manner not affected by any possible divergence between maps generated by each device. In other words, using the same environment map allows tracking to be performed in an established and shared tracking space.

The mapping and localisation method of the present invention may comprise several additional steps to further reduce the amount of processing on the controller 330 and/or the amount of data that needs to be transmitted between the controller 330 and HMD 20 (i.e. to reduce the processing and/or communication bandwidth). These additional steps may include one or more of: adapting the processing of the second images depending on the feature density in the second images, adapting the processing of the second images depending on the camera used to capture the second images, and/or determining the position of the controller 330 further based on the first images captured by the HMD 20.

Considering adapting the processing of the second images depending on the feature density in the images, the image processor 820 may be configured to determine a feature density in the second images, and, for one or more subsequent second images captured by the cameras 810, at step 940 the image processor 820 may be configured to detect more or fewer features in the subsequent images, or portions thereof, in dependence on the determined feature density. For example, if the feature density in a given portion of a second image is high (e.g. the image portion shows many objects with corners) in a given frame, the image processor 820 can ignore some features (i.e. detect fewer features) in that same portion of the image in one or more next frames (working on the assumption that the controller 330 has not moved too much between the frames) while still detecting sufficient features to allow accurate positioning of the controller 330 in the next frames by the HMD 20. This allows reducing the amount of features detected by the image processor 820, and so allows further reducing the amount of processing on the controller 330 and the amount of data that needs to be transmitted from the controller 330 to the HMD 20.

It will be appreciated that the determination of the feature density can be performed by the HMD 20 instead of the controller 330 as described above. In this case, the HMD 20 then transmits data to the controller 330 to detect more or fewer features in subsequent images captured by the cameras 810 in dependence on the determined feature density.

Optionally, the processing of the second images may depend on the camera used to capture the images. For instance, in embodiments where the controller 330 comprises multiple cameras 810, different numbers of features may be detected (and/or feature descriptors extracted), by the image processor 820 and/or the position processor 740 as appropriate, in second images captured by different cameras 810. Thus, at step 940 more features may be detected in images captured by one camera than in images captured by other cameras. The number of feature detections in images captured by each camera 810 may be determined based on the relative contributions of each of the cameras 810 to determining the position of the controller 330. In this way, computational resources may be used more efficiently and allocated to images that are most useful for positioning the controller 330.

In some cases, by comparing the relative contributions of second images from different cameras 810 to positioning the controller 330, it may be determined that images from one particular camera 810 is particularly useful for positioning the controller 330 and/or that images from another particular camera 810 are largely unhelpful for positioning the controller 330, and so it may be desirable to prioritise processing images from one camera over those from another. For example, the user may use the controller 330 in a room in their house and hold it in such a way that 'camera i' of cameras 810 is facing the ceiling (which is typically relatively featureless) most of the time during operation of the virtual reality system, whereas camera j of cameras 810 is mostly facing walls of the room at around waist height (and so is typically able to capture many features such as those corresponding to the furniture in the room). Thus, to reduce the amount of computation on the controller 330 (while not significantly affecting the accuracy of positioning the controller 330), the image processor 820 may be configured to detect more features in images captured by camera j than in images captured by camera i.

It will be appreciated that the number of features detected in second images captured by each camera 810 may be determined locally on the controller 330 and/or on the HMD 20 and transmitted to the controller 330 therefrom.

Considering determining the position of the controller 330 further based on the first images captured by the HMD 20, Figure 10 is a schematic flowchart of a further mapping and localisation method in accordance with an embodiment of the disclosure which uses the first images for positioning of the controller 330. The method of Figure 10 is identical to the method of Figure 9, except as described below.

Step 1010 comprises evaluating a predetermined condition by the position processor 740 of the HMD 20. As described in further detail below, this evaluation is then used to determine whether to determine the position of the controller 330 based on the first images or the second images. Determining the controller 330 position based on the first images can be preferred because it reduces the amount of processing on the controllers 330 (which can extend battery life in some cases) and the amount of communication required between the HMD 20 and controller 330 (and so also any resulting lag in determining the controller 330 position). However, as discussed above, the controller 330 may not always be visible to the cameras 710 of the HMD 20 so it may not always be possible to accurately determine the position of the controller 330 using the first images only. The method of Figure 10 allows balancing these two factors and reducing the amount of processing on the controller 330 whilst accurately tracking its position.

The predetermined condition is selected such that it acts as an indicator of whether the position of the controller 330 in a future cycle (e.g. the next processing cycle or next camera frame) can be accurately determined using only the first images captured by the HMD 20. In other words, the predetermined condition may be any condition which is indicative of whether the controller 330 is expected to remain (or enter) the field of view of a camera associated with the HMD 20. This may be based upon position or motion data for either of the devices, and/or data indicative of events or triggers within content being viewed that would be expected to provoke a particular physical reaction from a user. The conditions may be determined freely by the skilled person in accordance with this discussion.

In some embodiments, the predetermined condition relates to a previous (e.g. the most recent) determined position of the controller 330. For example, the step 1010 may comprise determining whether the previous position of the controller 330 is within a threshold camera angle of the first cameras 710, and/or whether the magnitude and/or direction of the velocity and/or acceleration of the controller 330 (e.g. determined based on data from inertial sensors of the controller 330 or previous positions of the controller 330) meets specific conditions. For example, evaluating the condition may comprise determining whether a previous position of the controller 330 is more than 10 degrees inwards (i.e. towards the centre of a camera's viewing cone) of a first camera's threshold camera angle, and whether the estimated velocity of the controller 330 is below a given threshold. These example predetermined conditions can thus act as indicators of whether or not the controller 330 will be sufficiently visible to the cameras 710 of the HMD 20 in the next cycle and so whether or not the position of the controller 330 can be accurately determined based on the first images only.

A step 1020 comprises checking, by the position processor 740, whether the condition evaluated at step 1010 is satisfied.

If the condition is satisfied at step 1020 (i.e. it is determined that the first images can be used to accurately position the controller 330), the method proceeds to step 1060. A step 1060 comprises determining the position of the controller 330, by the position processor 740, based on the first images captured by cameras 710 of the HMD 20 and the environment map generated by the HMD 20, e.g. using the techniques described with reference to Figures 3a to 6.

If the condition is not satisfied at step 1020 (i.e. it is determined that the first images cannot be used to accurately position the controller 330), the method proceeds to step 1030.

A step 1030 comprises requesting, by the communication processor 730, data relating to the second images from the controller 330. Next, a step 1040 comprises receiving, by the communication processor 730, the data relating to the second images from the controller 330. The data relating to the second images may be the same data as that transmitted at step 950 as described with reference to Figure 9.

A step 1050 comprises determining, by the position processor 740, the position of the controller 330 based on an environment map generated based on the first images and the second image data received at step 1040, e.g. in the same way as in step 960 described with reference to Figure 9. It will be appreciated that the position of the controller 330 may be determined further based on the first images as appropriate.

In some embodiments of the environment mapping methods of Figures 9 and 10, the communication processor 730 of the HMD 20 may further be configured to transmit configuration data for the cameras 810 to the controller 330. The configuration data may relate to various settings for the cameras 810, such as the exposure settings. The HMD 20 does its own image processing of images captured by cameras 710 and may have already determined the optimal settings for the current environment (e.g. the current lighting levels), so this allows the HMD 20 to share this information and support tracking of the controllers 330 using cameras 810.

As noted above, it will be appreciated that the mapping and localisation method of the present invention can be applied to positioning multiple devices (e.g. multiple controllers 330) using a map generated based on images captured by another device (e.g. the HMD 20).

In an alternative embodiment of the mapping and localisation method described above, the controller 330 receives the map generated by the HMD 20 from the HMD, and instead, of transmitting data relating to the second images to the HMD 20 for the HMD to determine its position, the controller 330 is configured to determine (e.g. using a position processor) its own position based on the features it detected and the received map. In this embodiment, some processing is therefore moved from the HMD 20 to the controller 330. However, the advantage of using the same environment map to position the HMD 20 and the controller 330 is maintained, and the HMD 20 and controller 330 can be positioned in a more consistent manner not affected by any possible divergence between maps generated by each device.

Referring back to Figure 7, in a summary embodiment of the present invention, a mapping and localisation apparatus 20, 300 may comprise the following:
A communication processor 730 configured (for example by suitable software instruction) to: receive data relating to one or more first images of an environment captured by one or more first cameras of a first mobile electronic device, as described elsewhere herein; and receive data relating to one or more second images of the environment captured by one or more second cameras of one or more second mobile electronic devices, as described elsewhere herein.

A mapping processor 720 configured (for example by suitable software instruction) to process the data relating to the one or more first images to generate a three dimensional map of the environment, as described elsewhere herein.

A position processor 740 configured (for example by suitable software instruction) to determine a position of the or each second mobile electronic device at least in part based on the generated map and the received data relating to the one or more second images, as described elsewhere herein.

Of course, the functionality of these processors may be realised by any suitable number of processors located at any suitable number of devices as appropriate rather than requiring a one-to-one mapping between the functionality and processing units.

It will be apparent to a person skilled in the art that variations in the above apparatus corresponding to operation of the various embodiments of the method and/or apparatus as described and claimed herein are considered within the scope of the present disclosure, including but not limited to that:
- the position processor 740 is configured to process the data relating to the one or more second images, and determine the position of the second mobile electronic device by executing a simultaneous location and mapping algorithm with respect to the processed data relating to the one or more second images and the generated map, as described elsewhere herein;
- the data relating to the second images comprises data relating to a plurality of features detected by the or each second mobile electronic device in the one or more second images, as described elsewhere herein;
   - In this case, optionally, the features are corner features, as described elsewhere herein;
      - where, optionally, the corner features are detected using Harris corner detection, as described elsewhere herein;
   - in this case, optionally, the data relating to the second images further comprises descriptors for the detected features, as described elsewhere herein;
   - in this case, optionally, the mapping and localisation apparatus further comprises an image processor configured to determine a feature density in the one or more second images, and the communication processor 730 is configured to transmit data to the or each second mobile electronic device to detect more or fewer features in subsequent images, or portions thereof, captured by the one or more second cameras in dependence on the determined feature density, as described elsewhere herein;
   - in this case, optionally, the one or more second cameras comprise at least two second cameras, and the data relating to the one or more second images comprises data relating to more features in second images captured by one second camera than in second images captured by at least one other second camera, as described elsewhere herein;
      - where, optionally, the communication processor is configured to transmit, to the second mobile electronic device, data for selecting the one second camera, as described elsewhere herein;
         - in which case, optionally, the data for selecting the one second camera is based on relative contributions of each of the at least two second cameras to determining the position of the or each second mobile electronic device by the apparatus, as described elsewhere herein;
- the data relating to the one or more second images comprises at least a portion of one or more of the second images, as described elsewhere herein;
   - in this case, optionally, the portion is a portion around one or more detected features in the second images, as described elsewhere herein;
- the position processor 740 is configured to determine the position of the second mobile electronic device further based on the received data relating to the one or more first images, as described elsewhere herein;
   - in this case, optionally, the position processor 740 is configured to determine whether a previous position of the or each second mobile electronic device meets a predetermined condition; and upon determining that the previous position meets the predetermined condition the position processor 740 is configured to determine the position of the or each second mobile electronic device based on the received data relating to the one or more first images and the map generated by the apparatus, as described elsewhere herein;
      - where, optionally, upon determining that the previous position does not meet the predetermined condition, the communication processor 730 is configured to request data relating to the one or more second images from the or each second mobile electronic device, as described elsewhere herein;
      - where, optionally, the predetermined condition relates to a threshold camera angle of the one or more first cameras, as described elsewhere herein;
      - where, optionally, upon determining that the previous position does not meet the predetermined condition, the position processor 740 is configured to determine the position of the or each second mobile electronic device based on the map generated by the apparatus and the received data relating to the one or more second images, as described elsewhere herein;
- the mapping processor 720 is further configured to determine a position of the first mobile electronic device by executing a simultaneous location and mapping algorithm with respect to the one or more first images and the generated map, as described elsewhere herein;
- the first mobile electronic device comprises a head mounted display apparatus 20, and the or each second mobile electronic device comprises a hand-held controller 330, as described elsewhere herein;
- the mapping and localisation apparatus is one of a game console 300 and a head mounted display apparatus 20, as described elsewhere herein;
- the communication processor 730 is further configured to transmit configuration data for the one or more second cameras to the or each second mobile electronic device, as described elsewhere herein;
- the mapping and localisation apparatus comprises the one or more first cameras configured for capturing the one or more first images, as described elsewhere herein;
- the mapping and localisation apparatus is the first mobile electronic device, as described elsewhere herein;
- the one or more first cameras are for capturing one or more first images of an environment around a user when the first mobile electronic device is used by the user, as described elsewhere herein; and
- the one or more second cameras are for capturing one or more second images of the environment around the user when the second mobile electronic device is used by the user, as described elsewhere herein.

In another summary embodiment of the present invention, a mapping and localisation system comprises: the mapping and localisation apparatus as described elsewhere herein, and the second mobile electronic device 330, wherein the second mobile electronic device comprises: one or more second cameras 810 for capturing the one or more second images of the environment; and a communication processor 830 configured (for example by suitable software instruction) to transmit data relating to the one or more second images to the mapping and localisation apparatus.

Referring back to Figure 8, in another summary embodiment of the present invention, a mobile electronic device 330 may comprise the following.

One or more cameras 810 for capturing one or more images of an environment, as described elsewhere herein. An image processor 820 configured (for example by suitable software instruction) to process the one or more images to detect a plurality of features in the images, as described elsewhere herein. A communication processor 830 configured (for example by suitable software instruction) to transmit data relating to the detected features to a mapping and localisation apparatus 20, 300 for determining a position of the mobile electronic device 330 at least in part based on: a map of the environment generated by the mapping and localisation apparatus using one or more first images of the environment captured by one or more first cameras of a first mobile electronic device 20, and the data relating to the detected features, as described elsewhere herein.

It will be apparent to a person skilled in the art that variations in the above mobile electronic device corresponding to operation of the various embodiments of invention as described and claimed herein are considered within the scope of the present disclosure, including but not limited to that:
- the one or more cameras 810 comprise at least two cameras, and wherein, based on relative contributions of each of the at least two cameras to determining the position of the mobile electronic device by the mapping and localisation apparatus, the image processor 820 is configured to detect more features in images captured by one camera than in images captured by at least one other camera, as described elsewhere herein;
- in this case, optionally, the communication processor is configured to receive, from the mapping and localisation apparatus, data for selecting the one camera, as described elsewhere herein;

- the mobile electronic device is a hand-held controller, and the mapping and localisation apparatus is a head mounted display apparatus, as described elsewhere herein;
- the image processor 820 is configured to process the one or more images to detect a plurality of corner features in the images, optionally using Harris corner detection, as described elsewhere herein;
- the image processor 820 is further configured to extract descriptors for the plurality of features, and the communication processor 830 is further configured to transmit data relating to the extracted descriptors to the mapping and localisation apparatus, as described elsewhere herein;
- the image processor 820 is configured to determine a feature density in the one or more images, and, for one or more subsequent images captured by the one or more cameras, the image processor 820 is configured to detect more or fewer features in the subsequent images in dependence on the determined feature density, as described elsewhere herein;
   - alternatively, the mapping and localisation apparatus can determine the feature density in the images and transmit this data to the mobile electronic device, as described elsewhere herein;
- the communication processor 830 is configured to transmit at least a portion of one or more of the images to the mapping and localisation apparatus for determining the position of the mobile electronic device, as described elsewhere herein;
   - the communication processor 830 is configured to transmit one or more portions around the detected features of the one or more of the images to the mapping and localisation apparatus, as described elsewhere herein; and
- the communication processor 830 is configured to receive configuration data for the one or more cameras 810 from the mapping and localisation apparatus, as described elsewhere herein.

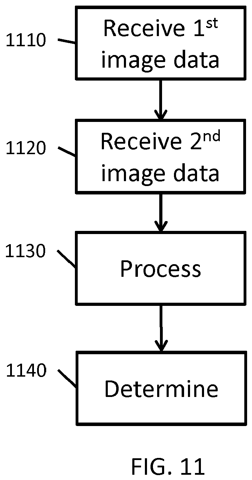

Referring to Figure 11, in another summary embodiment of the present invention a method of environment mapping and localisation comprises the following steps.

A step 1110 comprises receiving data relating to one or more first images of an environment captured by one or more first cameras of a first mobile electronic device, as described elsewhere herein.

A step 1120 comprises receiving data relating to one or more second images of the environment captured by one or more second cameras of one or more second mobile electronic devices, as described elsewhere herein.

A step 1130 comprises processing the data relating to the one or more first images to generate a three dimensional map of the environment, as described elsewhere herein.

A step 1140 comprises determining a position of the or each second mobile electronic device at least in part based on the generated map and the received data relating to the one or more second images, as described elsewhere herein.

In some cases, the first mobile electronic device comprises a head mounted display apparatus, and the or each second mobile electronic device comprises a hand-held controller.

In another summary embodiment of the present invention, a mapping and localisation method comprises: capturing, by a first mobile electronic device 20, one or more first images of an environment; processing the one or more first images to generate a three dimensional map of the environment from the first images; capturing, by one or more second mobile electronic devices 330, one or more second images of the environment; transmitting, by the or each second mobile electronic device, data relating to the second images to a mapping and localisation apparatus 20, 300; and determining, by the mapping and localisation apparatus, a position of the second mobile electronic device at least in part based on the generated map and the data relating to the second images transmitted by the second mobile electronic device.

In another summary embodiment of the present invention, a method of positioning a mobile electronic device 330 comprises: capturing one or more images of an environment using one or more cameras 810 of the mobile electronic device; processing the one or more images to detect a plurality of features in the images; and transmitting data relating to the detected features to a mapping and localisation apparatus 20, 330 for determining a position of the mobile electronic device at least in part based on: a map of the environment generated by the apparatus using one or more first images of the environment captured by one or more first cameras of a first mobile electronic device 20, and the data relating to the detected features.

It will be appreciated that the above methods may be carried out on conventional hardware suitably adapted as applicable by software instruction or by the inclusion or substitution of dedicated hardware.

Thus the required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A mapping and localisation apparatus, the apparatus comprising:
a communication processor configured to:
receive data relating to one or more first images of an environment captured by one or more first cameras of a first mobile electronic device; and
receive data relating to one or more second images of the environment captured by one or more second cameras of one or more second mobile electronic devices;
a mapping processor configured to process the data relating to the one or more first images to generate a three dimensional map of the environment; and
a position processor configured to determine a position of the or each second mobile electronic device at least in part based on the generated map and the received data relating to the one or more second images.

2. The apparatus of claim 1, wherein the position processor is configured to process the data relating to the one or more second images, and determine the position of the second mobile electronic device by executing a simultaneous location and mapping algorithm with respect to the processed data relating to the one or more second images and the generated map.

3. The apparatus of claim 1 or 2, wherein the data relating to the second images comprises data relating to a plurality of features detected by the or each second mobile electronic device in the one or more second images.

4. The apparatus of claim 3, wherein the apparatus further comprises an image processor configured to determine a feature density in the one or more second images, and the communication processor is configured to transmit data to the or each second mobile electronic device to detect more or fewer features in subsequent images, or portions thereof, captured by the one or more second cameras in dependence on the determined feature density.

5. The apparatus of any preceding claim, wherein the data relating to the one or more second images comprises at least a portion of one or more of the second images.

6. The apparatus of any preceding claim, wherein the position processor is configured to determine the position of the second mobile electronic device further based on the received data relating to the one or more first images.

7. The apparatus of claim 6, wherein the position processor is configured to determine whether a previous position of the or each second mobile electronic device meets a predetermined condition; and wherein upon determining that the previous position meets the predetermined condition the position processor is configured to determine the position of the or each second mobile electronic device based on the received data relating to the one or more first images and the map generated by the apparatus.

8. The apparatus of any preceding claim, wherein the mapping processor is further configured to determine a position of the first mobile electronic device by executing a simultaneous location and mapping algorithm with respect to the one or more first images and the generated map.

9. The apparatus of any preceding claim, wherein the first mobile electronic device comprises a head mounted display apparatus, and the or each second mobile electronic device comprises a hand-held controller.

10. The apparatus of any preceding claim, wherein the mapping and localisation apparatus is one of a game console and a head mounted display apparatus.

11. A mapping and localisation system comprising the mapping and localisation apparatus of any preceding claim, and the second mobile electronic device, wherein the second mobile electronic device comprises: one or more second cameras for capturing the one or more second images of the environment; and a communication processor configured to transmit data relating to the one or more second images to the mapping and localisation apparatus.

12. A mobile electronic device comprising:
one or more cameras for capturing one or more images of an environment;
an image processor configured to process the one or more images to detect a plurality of features in the images; and
a communication processor configured to transmit data relating to the detected features to a mapping and localisation apparatus for determining a position of the mobile electronic device at least in part based on: a map of the environment generated by the mapping and localisation apparatus using one or more first images of the environment captured by one or more first cameras of a first mobile electronic device, and the data relating to the detected features.

13. The mobile electronic device of claim 12, wherein the one or more cameras comprise at least two cameras, and wherein, based on relative contributions of each of the at least two cameras to determining the position of the mobile electronic device by the mapping and localisation apparatus, the image processor is configured to detect more features in images captured by one camera than in images captured by at least one other camera.

14. A mapping and localisation method, the method comprising:
receiving data relating to one or more first images of an environment captured by one or more first cameras of a first mobile electronic device;
receiving data relating to one or more second images of the environment captured by one or more second cameras of one or more second mobile electronic devices;
processing the data relating to the one or more first images to generate a three dimensional map of the environment; and
determining a position of the or each second mobile electronic device at least in part based on the generated map and the received data relating to the one or more second images.

15. A computer program comprising computer executable instructions adapted to cause a computer system to perform the method of claim 14.
